# FASCICULE DE BREVET EUROPEEN

(11) **EP 1 358 691 B1**
(45) Date de publication et mention de la délivrance du brevet: **04.06.2008**
(21) Numéro de dépôt: 02700397.9
(22) Date de dépôt: 24.01.2002
(51) Int. Cl.: H01M 8/02

(54) **PROCEDE DE FABRICATION DE PLAQUES BIPOLAIRES LEGERES POUR PILES A COMBUSTIBLE**
VERFAHREN ZUR HERSTELLUNG VON LEICHTGEWICHTIGEN BIPOLAREN PLATTEN FÜR EINE BRENNSTOFFZELLE
METHOD FOR MAKING LIGHT BIPOLAR PLATES FOR FUEL CELL

(30) Priorité: 26.01.2001 FR 0101081
(43) Date de publication de la demande: 05.11.2003
(73) Titulaire: HELION, 13545 Aix en Provence Cedex (FR)
(72) Inventeur: CHAIX, Jean-Edmond, F-04860 Pierrevert (FR)
(74) Mandataire: Poulin, Gérard
(86) Numéro de dépôt international: PCT/FR2002/000290
(87) Numéro de publication internationale: WO 2002/059995

(56) Documents cités:
- EP-A- 0 975 039
- EP-A- 1 020 941
- WO-A-00/44059
- WO-A-00/69003
- WO-A-97/50139
- WO-A-99/56333
- DE-A- 3 321 984
- FR-A- 2 810 795
- US-A- 5 514 487
- PATENT ABSTRACTS OF JAPAN vol. 2000, no. 01, 31 janvier 2000 (2000-01-31) -& JP 11 297337 A (TOKAI CARBON CO LTD), 29 octobre 1999 (1999-10-29)
- PATENT ABSTRACTS OF JAPAN vol. 1999, no. 01, 29 janvier 1999 (1999-01-29) -& JP 10 284094 A (ASAHI GLASS CO LTD), 23 octobre 1998 (1998-10-23)
- PATENT ABSTRACTS OF JAPAN vol. 2000, no. 11, 3 janvier 2001 (2001-01-03) -& JP 2000 231927 A (MITSUBISHI PLASTICS IND LTD), 22 août 2000 (2000-08-22)
- PATENT ABSTRACTS OF JAPAN vol. 1998, no. 14, 31 décembre 1998 (1998-12-31) -& JP 10 241709 A (AISIN TAKAOKA LTD), 11 septembre 1998 (1998-09-11)

## Description

### Domaine de l'invention

L'invention concerne le domaine des piles à combustible constituées d'un empilement d'un grand nombre d'éléments de base, comprenant chacun deux plaques polaires par lesquelles le comburant et le combustible sont acheminés vers une membrane séparatrice placée entre les deux plaques polaires.

Ce type de piles à combustible peut trouver son application dans les véhicules électriques faisant actuellement l'objet de nombreuses études de développement, en particulier les véhicules urbains de transport en commun de surface, tels que les autobus, les tramways et autres trolleybus. De nombreuses autres applications sont possibles, notamment sur des installations fixes, telles que les systèmes stationnaires de production d'électricité, comme ceux utilisés dans les hôpitaux ou autres bâtiments de service où l'éventualité d'une interruption d'alimentation en électricité doit être exclue.

### Art antérieur et problème posé

De nombreuses piles à combustible sont constituées d'une succession d'éléments de base comprenant eux-mêmes deux électrodes, dont une anode et une cathode, auxquelles sont apportés continûment un comburant et un combustible, qui restent séparés par une membrane échangeuse d'ions faisant office d'électrolyte. La membrane échangeuse d'ions peut être formée d'un électrolyte solide polymère et sépare le compartiment de l'anode, où se produit l'oxydation du combustible, tel que l'hydrogène, du compartiment de la cathode, où le comburant, tel que l'oxygène de l'air, est réduit. Deux réactions simultanées se produisent donc à ce niveau, l'oxydation du combustible à l'anode et la réduction du comburant à la cathode. Ces deux réactions s'accompagnent de l'établissement d'une différence de potentiel entre les deux électrodes.

Lorsque le comburant est de l'oxygène, par exemple sous la forme d'air, et le carburant est de l'hydrogène pur gazeux, les ions H⁺ et O⁻ se combinent et produisent de l'électricité sous la forme de cette différence de potentiels. La réaction peut se détailler de la façon suivante à l'anode :

2H₂ + 4OH⁻→ 4H₂O + 4e⁻.

La réaction à la cathode s'explique par la formule suivante :

O₂ + 2H₂O + 4e⁻ → 4OH⁻.

Chaque élément de base d'un empilement d'une pile à combustible est constitué d'un ensemble central comprenant donc la membrane, prise en sandwich entre les deux électrodes, cet ensemble étant lui-même placé entre deux flasques, appelées "plaques polaires". Ces dernières ont plusieurs fonctions.

La première de ces fonctions est d'amener au contact de l'ensemble réunissant la membrane et les électrodes, d'un côté le carburant, par exemple de l'hydrogène, et de l'autre côté le comburant, par exemple de l'air contenant de l'oxygène. Pour se faire, un canal est prévu sur toute la face des plaques polaires en contact avec la membrane. Chaque canal possède une entrée par laquelle pénètre le comburant ou le carburant, par exemple sous la forme gazeuse sèche ou humide, et une sortie par laquelle sont évacués les gaz neutres, l'eau générée par la réaction d'oxydoréduction dans le côté air et l'humidité résiduelle de l'hydrogène de son côté. Bien entendu, les deux circuits doivent être parfaitement étanches l'un par rapport à l'autre et chacun vis-à-vis de l'extérieur.

La deuxième fonction des plaques polaires est de collecter les électrons produits par la réaction d'oxydoréduction.

La troisième fonction de ces plaques polaires est d'assurer l'évacuation des calories produites conjointement avec les électrons lors de cette réaction d'hydroréduction.

En conséquence, ces plaques polaires sont donc nécessairement, d'une part, conductrices de l'électricité et, d'autre part, insensibles, du point de vue de la corrosion, au comburant et au carburant, c'est-à-dire à l'oxygène de l'air et à l'hydrogène. Elles peuvent donc être réalisées en carbone, en matière plastique, chargé, en alliage inoxydable, tel que l'acier inoxydable, austéno-ferritique, austénitique, en alliage chrome-nickel, en aluminium revêtu de chrome, etc.

D'autre part, dans le cadre des piles à combustible constituées d'un empilement d'éléments de base, les plaques polaires assurent également une fonction collective pour tout l'empilement, tel que la constitution des collecteurs d'alimentation en carburant et en comburant, et la fonction d'échange thermique, permettant ainsi la réfrigération de la pile constituée de l'empilement. Les plaques polaires sont donc de forme complexe et souvent de deux types différents, un pour chaque côté de l'élément de base.

Dans le cadre de la construction de piles à combustible, pour réduire le coût de production, il existe un besoin de limiter les étapes de fabrication des plaques polaires, en particulier les opérations d'usinage longues et coûteuses.

Le but de l'invention est de proposer une conception d'éléments de base et de plaques polaires uniques et de fabrication simple et peu coûteuse.

### Résumé de l'invention

A cet effet, l'objet principal de l'invention est un procédé de fabrication d'une plaque bipolaire constituant la première plaque polaire d'un premier élément de base d'une pile à combustible et la deuxième plaque polaire d'un deuxième élément de base adjacent au premier élément de base de la même pile à combustible, comprenant :
- un squelette central plat constitué de deux plaques minces, parallèles, espacées et fixées l'une à l'autre par collage et par l'intermédiaire de plots et délimitant ainsi un premier espace pour permettre une circulation de réfrigérant ;
- deux plaques d'alimentation en matériau composite conducteur placées de part et d'autre du squelette central plat, sauf sur le bord, et sur chacune desquelles est formé au moins un canal de circulation de carburant ou de comburant ; et
- un cadre en matériau diélectrique placé de part et d'autre du squelette central plat et autour des plaques d'alimentation ;
des trous de collecteur étant prévus à la périphérie des plaques minces et du cadre pour constituer des collecteurs de carburant, de comburant, des canaux d'alimentation, situés entre ces plaques minces étant prévus pour relier ces trous collecteurs aux canaux de circulation.

Les plaques minces et les plaques d'alimentation sont en graphite phénolique.

Le squelette central plat se complète avantageusement de plots percés, placés autour des collecteurs constitués par les trous de collecteurs et placés entre les deux plaques minces pour contribuer à la continuité des collecteurs.

Il s'avère très avantageux d'utiliser des joints en silicone implantés sur les surfaces du cadre, autour des trous constituant les collecteurs de carburant et de comburant et à la périphérie de la membrane d'un ensemble membrane/électrodes pour assurer l'étanchéité entre deux plaques bipolaires.

Lorsque chaque plaque bipolaire a une forme carrée, le au moins un canal de circulation de comburant ou de carburant de chaque surface de plaque d'alimentation a une forme de spirale carrée.

Les étapes principales sont successivement les suivantes :
- solidarisation entre elles des deux plaques minces, par l'intermédiaire des plots, par collage avec une colle conductrice ;
- usinage au jet d'eau des canaux de circulation dans les deux plaques d'alimentation ;
- collage autour du squelette central plat des plaques d'alimentation en composite conducteur avec une colle conductrice ; et
- injection du cadre en matériau thermoplastique électrique.

Simultanément à cette quatrième étape, peut s'effectuer l'injection des joints en silicone sur les surfaces du cadre.

### Liste des figures

L'invention et ses différentes caractéristiques et avantages seront mieux compris à la lecture de la description suivante d'une réalisation de l'invention. Elle est accompagnée de quatre figures qui représentent respectivement :
- figure 1, en coupe, deux plaques bipolaires selon l'invention ;
- figure 2, une autre coupe de la même plaque bipolaire selon l'invention ;
- figure 3, en coupe cavalière, le coin de la plaque bipolaire selon l'invention ; et
- figure 4, en vue de dessus, une plaque bipolaire selon l'invention.

### Description détaillée d'une réalisation de l'invention

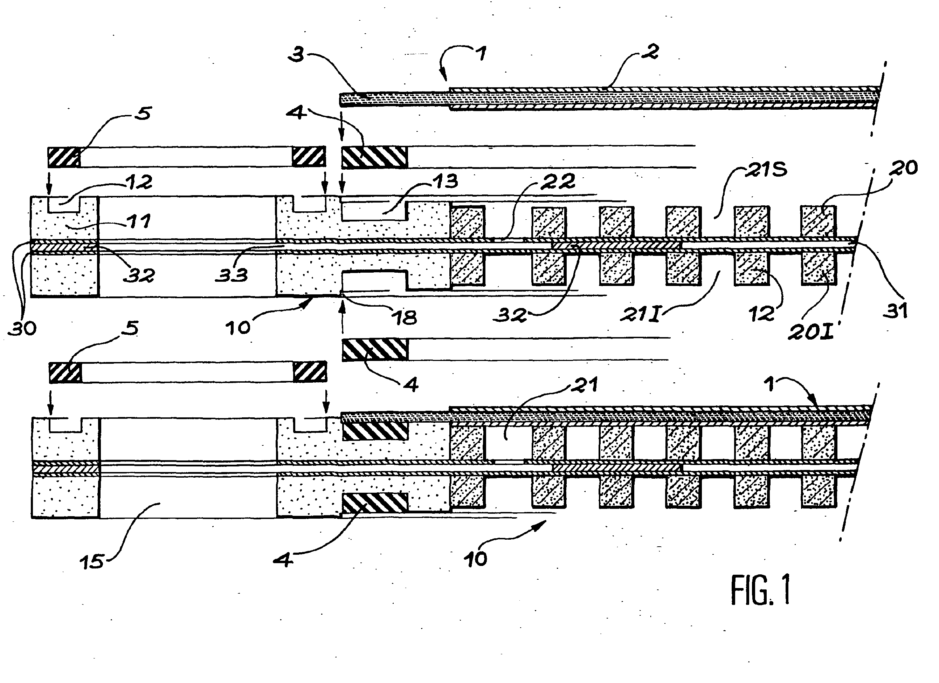

Sur la figure 1, sont représentés deux ensembles membrane/électrodes 1 et deux plaques bipolaires 10. Chaque ensemble membrane/électrodes 1 est donc constitué d'une membrane 3 entourée de deux électrodes 2 sur toute sa surface, excepté à la périphérie. Chacun de ces ensembles membrane/électrodes 1 doit être placé entre deux plaques bipolaires 10.

Chaque plaque bipolaire 10 comprend principalement un squelette central plat de chaque côté duquel sont fixés une plaque d'alimentation 20S et 20I en composite, dans la partie centrale, et un cadre 11 en matériau diélectrique dans la partie périphérique.

Le squelette central plat est composé essentiellement de deux plaques minces 30, espacées l'une de l'autre de 1 à 2 mm. Elles sont avantageusement constituées avec du graphite chargé en résine phénolée, ceci leur permet d'être chimiquement inertes et insensibles aux diverses corrosions, mais surtout d'être légères. Dans leur partie centrale, elles sont fixées dans cette position au moyen de plots non représentés sur cette figure 1. Un espace 31 est ainsi délimité au centre de cet ensemble et est destiné à recevoir et à contenir la circulation du fluide réfrigérant, tel que de l'eau prévue pour réfrigérer chaque étage de l'empilage de la pile à combustible.

Les plaques minces 30 sont percées de plusieurs trous à leur périphérie pour contribuer à former des collecteurs 15 continus de comburant et de carburant et permettant également d'y passer des tirants, non représentées, qui assurent la fixation des différents étages de la pile à combustible. On constate que, au niveau de ces collecteurs 15, les deux plaques minces 30 définissent un deuxième espace qui est un canal d'alimentation 33, isolé du premier espace 31 au moyen d'un plot creux d'alimentation 32. Ce dernier entoure également le collecteur 15 et un orifice d'alimentation 22 en carburant ou en comburant débouchant dans une plaque d'alimentation 20S, au niveau d'un canal de circulation 21S, qui débouche lui-même sur la surface externe de l'ensemble. En effet, sur chaque côté du squelette central plat est appliquée par collage une plaque d'alimentation 20S ou 20I destinée à distribuer le comburant ou le carburant sur toute la surface d'une des deux électrodes de l'ensemble d'une membrane/électrodes 1.

Une des caractéristique principales de l'invention tient au fait que les canaux de circulation 21S et 21I traversent, sur toute leur épaisseur, leur plaque respective 20S et 20I. Il est ainsi possible d'usiner ces canaux en série. En effet, en empilant plusieurs plaques d'alimentation l'une sur l'autre, avant la formation des canaux d'alimentation 21S et 21I, on peut prévoir d'usiner plusieurs plaques à la fois en une même opération. En effet, le matériau constitutif de ces plaques d'alimentation 20S et 20I, étant du graphite chargé de résine phénolée. Cette matière peut être usinée au jet d'eau. On comprend ainsi facilement qu'une seule phase d'usinage par jet d'eau puisse permettre d'usiner par percement les canaux de plusieurs plaques. De plus, en utilisant la commande numérique, il est possible de dessiner de nombreux motifs différents de canaux d'alimentation 21I, 21S sur ces plaques d'alimentation 201, 20S. De plus, le temps d'usinage est extrêmement restreint.

Il est facile de comprendre que chaque électrode des ensembles membrane/électrodes 1 peut être en contact avec le carburant ou le comburant, lorsque l'ensemble membrane/électrodes 1 est placé entre deux plaques bipolaires 10, comme représenté dans la partie basse de la figure. Un joint de membrane 4 est placé dans un évidement périphérique 13 entourant les plaques d'alimentation 20S et 20I.

On constate qu'un canal d'alimentation 33 n'alimente que le canal de circulation supérieur 21S. En effet, le collecteur constitué, entre autre, par le trou de collecteur 15 représenté sur cette figure 1 ne contient que du comburant ou du carburant. De la même façon, d'autres collecteurs contiennent le combustible complémentaire à celui circulant dans les canaux de circulation 21S pour alimenter les canaux inférieurs 21I. Ainsi, on fait circuler dans un premier 21S de ses canaux de circulation du carburant, sur une première face, et, sur l'autre face, dans un deuxième canal de circulation 21I du comburant.

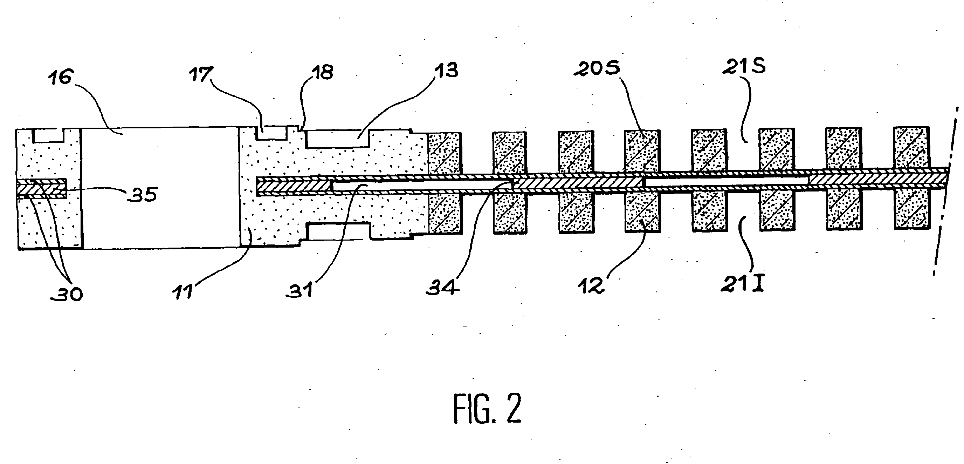

En référence à la figure 2, il n'est pas nécessaire que tous les trous de collecteur soient en communication avec l'un des deux canaux de circulation 21S et 21I par l'intermédiaire d'un canal d'alimentation 33. En conséquence, la figure 2 montre un deuxième type de trou de collecteur 16 qui n'est pas en communication fluidique avec les canaux de circulation 21S et 21I. Dans ce cas, la paroi interne de chaque trou de collecteur 16 est constitué entièrement par le cadre 11. A cet effet, chaque plaque mince 30 possède un trou de diamètre supérieur au diamètre interne du collecteur pour permettre au matériau, par exemple thermoplastique diélectrique, constituant le cadre 11 d'occuper toute la hauteur de la plaque polaire à ce niveau.

Sur cette figure 2, on peut donc constater que l'espace 31 subsiste entre les deux plaques minces 30 pour la circulation de l'eau contribuant à la réfrigération de la pile.

On constate sur les figures 1 et 2 qu'un lamage 18 est prévu sur chacune des deux surfaces du cadre 11, à l'intérieur de celui-ci, pour permettre le positionnement et le maintien de chaque membrane 3.

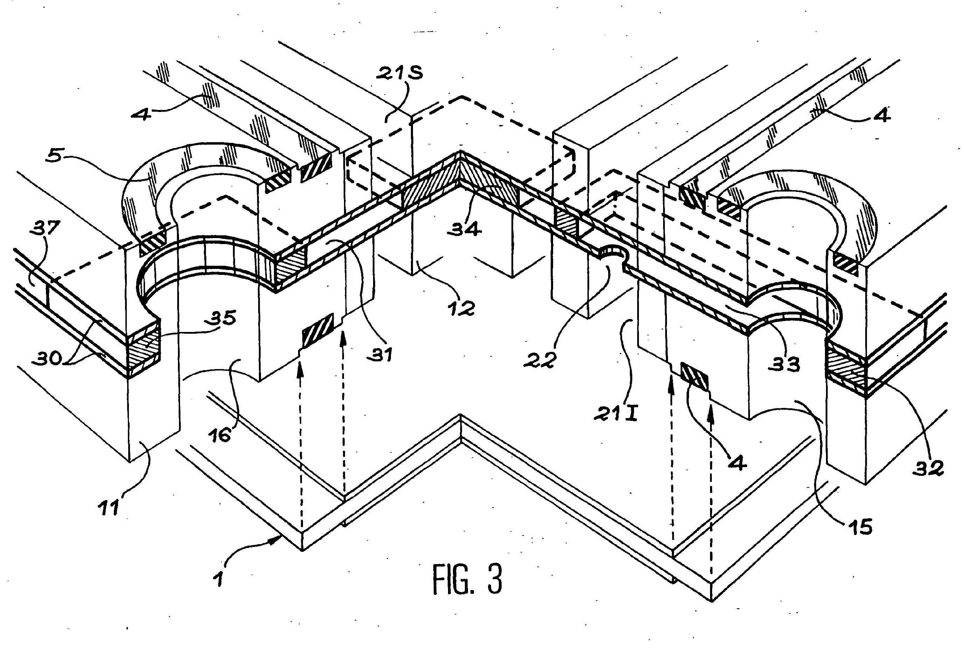

La figure 3, de type écorché, permet de mieux comprendre, entre autres, la différence entre les deux types de trous de collecteurs. En effet, sur la partie droite de cette figure 3, se trouve un trou de collecteur 15, tel que représenté sur la figure 1. Il met donc en communication le carburant ou le comburant circulant dans le collecteur, qu'il constitue avec les autres trous de collecteurs placés au-dessus et en dessous de lui, avec le canal de circulation 21I, par l'intermédiaire du canal d'alimentation 33 et des trous d'alimentation 22. Dans ce cas, on distingue bien le plot creux d'alimentation 32 qui entoure, à la fois, le trou de collecteur 15 et le trou d'alimentation 22 pour former le canal d'alimentation 33.

Au milieu de cette figure 3, entre les deux plaques minces 30, se trouve un plot 34. La fonction de ce dernier est donc de maintenir les deux plaques métalliques distantes l'une de l'autre, de manière à définir les différents espaces, évoqués précédemment, à savoir le premier espace 31, destiné à la réfrigération de la pile par de l'eau, et les canaux d'alimentation 33. On note que les premiers espaces 31 sont en communication avec l'extérieur par des sorties 37. De la sorte, l'ensemble de la pile à combustible, constituée par l'empilage de différentes étages, comprenant chacun un ensemble membrane/électrodes et deux plaques polaires, d'être baigné dans un bain d'eau pour faciliter sa réfrigération par circulation libre du fluide réfrigérant, par exemple de l'eau.

Sur la partie gauche de cette figure 3, on voit qu'un autre type de plots 35 est prévu pour entourer les trous de collecteur 16 de deuxième type et maintenir les deux plaques minces 30 à la distance idoine.

Sur cette figure 3, il est facile de voir la forme périphérique rectangulaire du joint périphérique 4 et la forme circulaire des joints de collecteur 5.

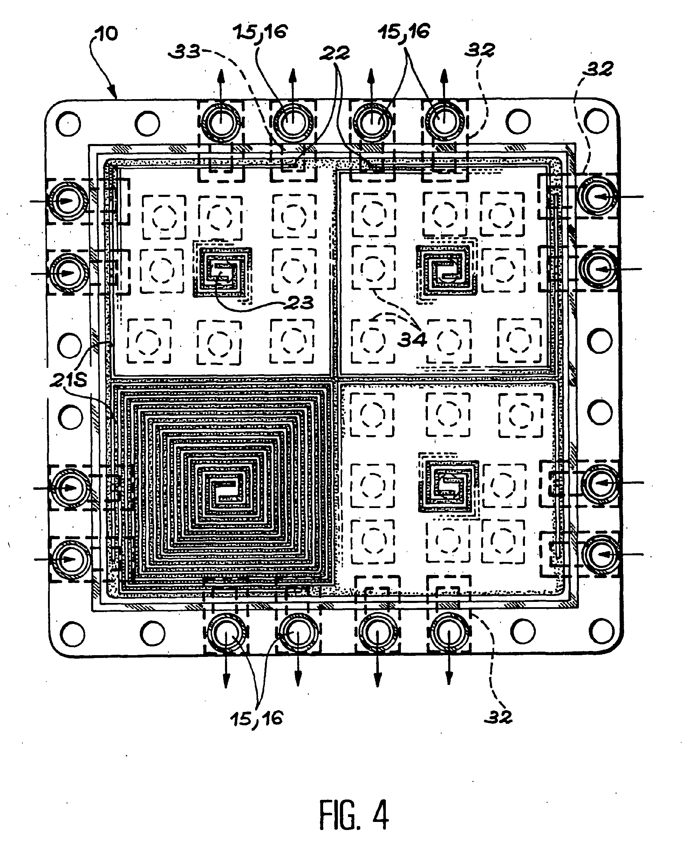

La figure 4 montre, en totalité, une plaque bipolaire et, plus particulièrement, la manière dont les canaux de circulation 21S sont agencés sur une surface d'une telle plaque bipolaire. Dans l'exemple représenté, quatre canaux de circulation 21S sont implantés sur une même surface d'une plaque bipolaire 10. Chacun de ces canaux de circulation 21S a une forme de spirale en carrée, dont on peut distinguer le centre 23. Chacun d'entre eux est alimenté par un des collecteurs, représentés ici leurs trous de collecteurs 15 et 16 et est déchargé par un autre de ces mêmes collecteurs. Puisqu'il existe le même nombre de canaux de circulation sur l'autre face de la plaque bipolaire, le nombre de collecteurs est donc doublé. En d'autres termes, avec quatre canaux de circulation de chaque côté de la plaque bipolaire, huit collecteurs d'alimentation et huit collecteurs d'évacuation sont nécessaires. Les flèches, représentées sur cette figure 4, suggèrent donc ces alimentations et évacuations de chacun des huit canaux de circulation d'une même plaque bipolaire.

Sont également représentés en traits interrompus, les plots creux d'alimentation 32, qui entourent à la fois chacun un collecteur 15 ou 16, un orifice d'alimentation 22 et un canal d'alimentation 33. De même, sont représentés en traits interrompus tous les plots 34 maintenant écartés de façon parallèle les plaques métalliques.

Le procédé de fabrication de ce type de plaque bipolaire se fait donc par une première phase consistant à construire un squelette central plat constitué des deux plaques minces 30, en graphite phénolique, et des plots 32, 34 et 35 en même matière par collage à chaud, sous presse.

Plusieurs dizaines de squelettes centraux plats peuvent ainsi être assemblés simultanément.

Les plaques d'alimentation 20I et 20S, usinée préalablement au jet d'eau, sont collées sur le squelette central plat ainsi formé.

La colle utilisée doit être conductrice.

Une polymérisation termine la fabrication de ces éléments.

Le cadre est obtenu par injection de matériau thermoplastique diélectrique. Simultanément à cette injection, à lieu également une injection des joints de collecteur 5, périphériques 4 et d'alimentation 32 en silicone.

### Avantages de l'invention

Cette structure de plaque bipolaire est particulièrement légère, puisqu'elle met en oeuvre du graphite phénolique et du plastique.

La fabrication est relativement simple et peut être mise en oeuvre pour un grand nombre de plaques bipolaires.

L'utilisation de plaques en graphite livré en plaque permet d'assurer un parallélisme très précis entre les faces des plaques bipolaires. Un usinage en rodoir est souvent utilisé à cet effet.

## Revendications

1. Procédé de fabrication d'une plaque bipolaire constituant la première plaque polaire d'un élément de base d'une pile à combustible et la deuxième plaque polaire d'un deuxième élément de base adjacent au premier élément de base de la même pile à combustible, comprenant :
- un squelette central plat constitué de deux plaques minces (30) parallèles, espacées et fixées l'une à l'autre par collage au moyen de plots (32, 34, 35) et délimitant ainsi un premier espace (31) pour permettre une circulation de réfrigérant ;
- deux plaques d'alimentation (20I, 20S), en matériau composite conducteur, placées de part et d'autre du squelette central plat, sauf sur le bord, et sur chacune desquelles est formé au moins un canal de circulation (21S, 21I) de carburant ou de comburant ; et
- un cadre (11) en matériau diélectrique placé de part et d'autre du squelette central plat et autour des plaques d'alimentation (20I, 20S) ;
des trous collecteurs (15, 16) étant prévus à la périphérie du squelette central plat et du cadre (11) pour constituer des collecteurs de carburant et de comburant, des canaux d'alimentation (33), étant situés entre les plaques minces (30) et reliant les trous de collecteurs (15, 16) aux canaux de circulation (21S, 211),
les plaques minces (30) et les plaques d'alimentation (20I, 20S) étant en graphite phénolique,
**caractérisé en ce qu'**il comprend les étapes successives suivantes :
- solidarisation entre elles des deux plaques minces (30), par l'intermédiaire des plots (32, 34, 35), par collage avec une colle conductrice ;
- usinage au jet d'eau des canaux de circulation (21S, 21I) dans les deux plaques d'alimentation (20I, 20S) ;
- collage, autour du squelette central plat et des plaques d'alimentation (20I, 20S) en composite conducteur, avec une colle conductrice ; et
- injection du cadre (11) en matériau thermoplastique diélectrique.

2. Procédé de fabrication selon la revendication 1, **caractérisé en ce qu'**il consiste, simultanément à la troisième étape d'injection du cadre (11), à injecter les joints en silicone (4, 5) sur la surface de ce cadre (11).

## Claims

1. Process for the production of a bipolar plate constituting the first pole plate of a basic element of a fuel cell and the second pole plate a second basic element adjacent to the first basic element of said same fuel cell, comprising:
- a flat, central skeleton constituted by two thin, parallel plates (30), which are spaced and fixed to one another by gluing using blocks (32, 34, 35) and thus defining a first space (31) to permit a circulation of a coolant,
- two supply plates (20I, 20S), made from a conductive composite material, placed on either side of the flat, central skeleton, except on the edge, and on each of which is formed at least one circulation channel (21S, 21I) for fuel or oxidant and
- a dielectric material frame (11) placed on either side of the flat, central skeleton and around the supply plates (20I, 20S),
manifold holes (15, 16) being provided on the periphery of the flat, central skeleton and the frame (11) in order to form fuel and oxidant collectors, supply channels (33) being positioned between the thin plates (30) and linking the manifold holes (15, 16) with the circulation channels (21S, 21I), the thin plates (30) and supply plates (20I, 20S) being of phenolic graphite, **characterized in that** it comprises the following successive phases:
- joining together two thin plates (30) by means of blocks (32, 34, 35) by gluing using a conductive glue,
- water jet machining of the circulation channels (21S, 21I) in the two supply plates (20I, 20S),
- gluing around the flat, central skeleton and the conductive composite supply plates (20I, 20S) using a conductive glue and
- injection of dielectric, thermoplastic material into the frame (11).

2. Production process according to claim 1, **characterized in that** it comprises, simultaneously with the third injection stage of the frame (11), injecting the silicone joints (4, 5) onto the surface of said frame (11).

## Patentansprüche

1. Verfahren zum Herstellen einer bipolaren Platte, welche die erste polare Platte eines Grundelements einer Brennstoffzelle und die zweite polare Platte eines zweiten Grundelements bildet, das angrenzend zum ersten Grundelement derselben Brennstoffzelle angeordnet ist, enthaltend:
- ein flaches Mittelgerippe, das aus zwei parallel verlaufenden dünnen Platten (30) besteht, die beabstandet und durch Verkleben mittels Kontaktstücke (32, 34, 35) aneinander befestigt sind und somit einen ersten Raum (31) begrenzen, um eine Kühlmittelzirkulation zu gestatten;
- zwei Versorgungsplatten (201, 20S) aus leitfähigem Verbundmaterial, die beiderseits des flachen Mittelgerippes, außer am Rand, angeordnet sind und an denen jeweils zumindest ein Kanal (21 S, 21I) zur Zirkulation von Brennstoff bzw. Oxidationsmittel ausgebildet ist; und
- einen Rahmen (11) aus dielektrischem Material, der beiderseits des flachen Mittelgerippes und um die Versorgungsplatten (20I, 20S) herum angeordnet ist;
wobei Kollektorlöcher (15, 16) am Umfang des flachen Mittelgerippes und des Rahmens (11) vorgesehen sind, um Brennstoff- und Oxidationsmittelkollektoren zu bilden, wobei sich zwischen den dünnen Platten (30) Versorgungskanäle (33) befinden und die Kollektorlöcher (15, 16) mit den Zirkulationskanälen (21S, 21I) verbinden,
wobei die dünnen Platten (30) und die Versorgungsplatten (20I, 20S) aus Phenolgraphit bestehen,
**dadurch gekennzeichnet, dass** es nacheinander die nachfolgenden Schritte umfasst:
- Verbinden der beiden Platten (30) miteinander mittels der Kontaktstücke (32, 34, 35) durch Verkleben mit einem leitfähigen Klebstoff,
- Einarbeiten der Zirkulationskanäle (21S, 21I) in die beiden Versorgungsplatten (20I, 20S) mittels Wasserstrahls;
- Verkleben um das flache Mittelgerippe und die Versorgungsplatten (20I, 20S) aus leitfähigem Verbundmaterial mit einem leitfähigen Klebstoff; und
- Spritzen des Rahmens (11) aus dielektrischem, thermoplastischen Material.

2. Herstellungsverfahren nach Anspruch 1, **dadurch gekennzeichnet, dass** es darin besteht, zugleich mit dem dritten Schritt zum Spritzen des Rahmens (11) die Silikondichtungen (4, 5) an die Oberfläche dieses Rahmens (11) anzuspritzen.
